# EUROPEAN PATENT APPLICATION

(11) **EP 3 435 679 A1**
(43) Date of publication of application: **30.01.2019**
(21) Application number: 17770522.5
(22) Date of filing: 10.03.2017
(51) Int. Cl.: H04N 21/236, H04N 21/488, H04N 21/2362, H04N 21/434

(54) **BROADCAST SIGNAL TRANSMISSION AND RECEPTION METHOD AND DEVICE**

(30) Priority: 22.03.2016 US 201662311415 P; 09.05.2016 US 201662333282 P
(71) Applicant: LG Electronics Inc., Seoul 07336 (KR)
(72) Inventor: HWANG, Soojin, Seoul 06772 (KR); SUH, Jongyeul, Seoul 06772 (KR)
(74) Representative: Katérle, Axel
(86) International application number: PCT/KR2017/002619
(87) International publication number: WO 2017/164551

(57) **Abstract**

The present invention relates to a device and a method for transmitting and receiving a broadcast signal including a subtitle service. A broadcast signal reception device according to one embodiment of the present invention can comprise: a tuner for receiving a broadcast signal including a video stream and a subtitle stream and further including version information of font data related to subtitle data, included in the subtitle stream, and an indicator indicating whether the font data is mandatory; a demultiplexer for demultiplexing the received broadcast signal into the video stream and the subtitle stream; a decoder for individually decoding the video stream and the subtitle stream; a network processor for downloading the font data on the basis of the version information of the font data; and a display processor for displaying the subtitle stream by using the font data.

## Description

### [Technical Field]

The present invention relates to an apparatus and method for transmitting and receiving a broadcast signal.

### [Background Art]

With the development of digital technology and communication technology, audio/video-based multimedia content has been increasingly distributed and requested in various fields, such as the Internet and personal media, as well as broadcasts and movies. In addition, consumers' demand for realistic media that provide a stereoscopic effect through broadcasts and movies has increased. Furthermore, as the size of TVs in homes is increased together with the development of display technology, consumers' demand for realistic content at a high quality of a High-Definition (HD) or higher level is increasing. Realistic broadcasts through an Ultra High Definition TV (UHDTV) and a 3DTV have attracted considerable attention as a next-generation broadcast service. In particular, an Ultra High Definition (UHD) broadcast service has been increasingly discussed.

Currently, a broadcast subtitle service has been provided in the form of a closed caption or a digital video broadcasting (DVB) subtitle. Among these, in the case of DVB subtitling, a subtitle is provided in the form of a bitmap image, and therefore it is necessary to provide subtitles with different sizes for images with various sizes or to scale a single type of subtitle. In the former case, efficiency may be lowered in terms of bandwidth usage, and in the latter case, sharpness may be lowered due to scaling. In particular, in recent days, in which a high-resolution broadcast service via a UHDTV has been actively discussed, there is a need for a new broadcast subtitle service in order to overcome this problem.

### [Disclosure]

### [Technical Problem]

It is an object of the present invention to improve transmission efficiency in a method and apparatus for transmitting a broadcast signal.

It is another object of the present invention to provide a transmission apparatus and method capable of providing a subtitle service through a broadcast network.

It is a further object of the present invention to provide an apparatus and method capable of a timed text subtitle service based on an extensible markup language (XML).

### [Technical Solution]

A broadcast signal transmission apparatus according to an embodiment of the present invention includes an encoder for encoding video data to generate a video stream, a multiplexer for generating a broadcast signal including the generated video stream and a subtitle stream, the broadcast signal further including version information of font data associated with subtitle data contained in the subtitle stream and an indicator indicating whether the font data are essential, and a transmitter for transmitting the generated broadcast signal.

The version information of the font data and the indicator indicating whether the font data are essential may be transmitted in the state of being contained in Program-Specific Information (PSI) or service information.

The broadcast signal may further include information enabling downloading of the font data, and the information enabling downloading of the font data may be uniform/universal resource identifier (URI) information comprising a transaction identifier (transaction ID).

The subtitle stream may include a broadcast id descriptor, and a data broadcast identifier (data_broadcast_id) contained in the broadcast id descriptor may be set to a value indicating Synchronized Auxiliary Data (SAD).

A broadcast signal reception apparatus according to an embodiment of the present invention includes a tuner for receiving a broadcast signal, the broadcast signal including a video stream and a subtitle stream, the broadcast signal further including version information of font data associated with subtitle data contained in the subtitle stream and an indicator indicating whether the font data are essential, a demultiplexer for demultiplexing the received broadcast signal into the video stream and the subtitle stream, a decoder for decoding the video stream and the subtitle stream, a network processor for downloading the font data based on the version information of the font data, and a display processor for displaying the subtitle stream using the font data.

The version information of the font data and the indicator indicating whether the font data are essential may be transmitted in the state of being contained in Program-Specific Information (PSI) or service information.

The broadcast signal may further include information enabling downloading of the font data, and the information enabling downloading of the font data may be uniform/universal resource identifier (URI) information comprising a transaction identifier (transaction ID).

The subtitle stream may include a broadcast id descriptor, and a data broadcast identifier (data_broadcast_id) contained in the broadcast id descriptor may be set to a value indicating Synchronized Auxiliary Data (SAD).

### [Advantageous Effects]

According to an embodiment of the present invention, it is possible to improve the transmission efficiency of a broadcasting system.

According to an embodiment of the present invention, it is possible to provide a subtitle service through a broadcast network.

According to an embodiment of the present invention, it is possible for a broadcast reception apparatus and method to extract a subtitle from a broadcast signal and to display the extracted subtitle.

### [Description of Drawings]

FIG. 1 is a view showing an XML-based broadcast subtitle service according to an embodiment of the present invention;
FIG. 2 shows a data field included in a PES packet according to an embodiment of the present invention;
FIG. 3 shows a font segment according to an embodiment of the present invention;
FIG. 4 shows an extended font segment according to an embodiment of the present invention;
FIG. 5 shows a method of transmitting font information as signaling information according to an embodiment of the present invention;
FIG. 6 shows a method of identifying DVB SAD according to an embodiment of the present invention;
FIG. 7 is a view showing the detailed configuration of a broadcast receiver according to an embodiment of the present invention;
FIG. 8 is a block diagram showing a broadcast transmitter according to an embodiment of the present invention;
FIG. 9 is a block diagram showing a broadcast receiver according to an embodiment of the present invention;
FIG. 10 is a view showing a method of transmitting a broadcast signal including an XML subtitle according to an embodiment of the present invention; and
FIG. 11 is a view showing a method of receiving a broadcast signal including an XML subtitle according to an embodiment of the present invention.

### [Best Mode]

As a broadcast service through an Internet protocol (IP) has begun to be provided as a next-generation broadcast service, a new subtitle service standard has been established to replace a typical broadcast subtitle. In future, a broadcast service in the form of a fusion of existing broadcast service and IP is expected, and in this case, it is not effective to separately serve subtitles formed with different standards.

Examples of the IP broadcast subtitle service standard may include a time text markup language (TTML), Society of Motion Picture and Television Engineers Timed Text (SMPTE-TT), and European Broadcasting Union time text (EBU-TT-D), which have been established based on XML. These may be appropriate for Dynamic Adaptive Streaming over HTTP (DASH)-based services that need to support various resolutions in that a subtitle independent of the size of an image can be served. There has been an attempt to use an XML subtitle in a UHD broadcast service using this advantage, and therefore there is a need for a method of transmitting an XML subtitle established to be appropriate for media and IP streaming according to an existing broadcast service.

Recently, standards of XML language-based subtitles such as time text markup language (TTML) and EBU time text (EBU-TT) have been established. The standards are used for a subtitle service in media and IP streaming environments but the standards groups, such as DVB and ATSC, also require that the standards be capable of being used in a broadcast service. There are requirements set with the goal of taking advantage of adaptive use of standards in various service environments (e.g., HD and UHD) based on the same subtitle source as well as use of an integrated subtitle source in various broadcast environments.

For easy understanding of the present invention and the convenience of description, terms and abbreviations are defined as follows.

Extensible Markup Language (XML) is an improved version of HTML. A homepage construction function, a retrieval function, etc. are further improved, and complicated data processing of a client system can be easily performed. In the present invention, XML is used as the language constituting subtitle data, and an XML subtitle may include a head and a body.

An Elementary Stream (ES) may mean the output of a data encoder. That is, the output of a video encoder and the output of an audio encoder may be defined as a video ES and an audio ES, respectively. In the present invention, an XML subtitle ES may be defined and used.

A Packetized Elementary Stream (PES) is an ES that is packetized and may mean a stream of packets having headers.

A Transport Stream (TS) is a stream for transport including one or several programs in an MPEG-2 system, and may be used for a transport medium having a transport error. In the present invention, the TS may mean a transport stream in which at least two of a video ES, an audio ES, or a subtitle ES are multiplexed and transmitted.

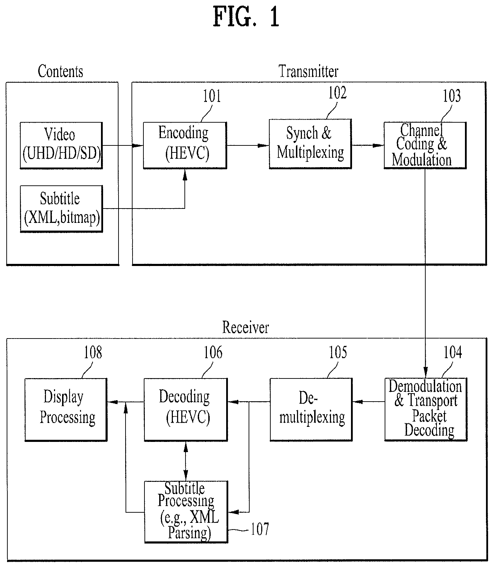

FIG. 1 shows an XML-based broadcast subtitle service according to an embodiment of the present invention. FIG. 1 is a diagram showing a transmission end, a reception end, and an end-to-end system for a digital broadcast service. An XML-based broadcast subtitle used in the present invention is applicable to UHD/HD/SD, since the XML-based broadcast subtitle is not affected by the size of an image.

The transmission end transmits a compressed image and an XML subtitle modified for transmission via a multiplexer. At this time, presentation time stamp (PTS) information is used for synchronization between two pieces of data. In FIG. 1, the transmission end may receive video data and subtitle information. The resolution of the video data input to the transmission end may be UHD, HD, or SD. In addition, the subtitle information input to the transmission end may be written using XML or bitmap. The video data input to the transmission end may be encoded (101) by the transmission end. The transmission end may use High Efficiency Video Coding (HEVC) as a scheme for encoding video data. The transmission end may synchronize and multiplex the encoded video data and the XML subtitle (102). Here, the XML subtitle may be modified for transmission. That is, the XML subtitle may be modified into an XML subtitle ES and an XML subtitle PES for transmission. The video data and XML subtitle encoded as described above may be synchronized using PTS information. The transmission end may channel-code and modulate the synchronized and multiplexed data (103), and may transmit the data as a broadcast signal.

The reception end provides a subtitle after demultiplexing, video decoding, and XML parsing. At this time, the reception end performs synchronization between the video data and the subtitle based on a PTS. The reception end may demodulate a received broadcast signal and perform transport packet decoding (104). The decoded transport packet is demultiplexed (105), and is then input to a video decoder 106 and a subtitle processor (e.g. an XML parser) 107. Here, the video decoder 106 may decode UHD, HD, or SD video data depending on the resolution of the received video data. The video decoder 106 may use High Efficiency Video Coding (HEVC) as a scheme for decoding video data. In addition, the subtitle processor 107 may extract an XML subtitle. During this process, the reception end may synchronize the video data and the XML subtitle based on a PTS. The decoded video data and XML subtitle may be processed and displayed by a display processor 108.

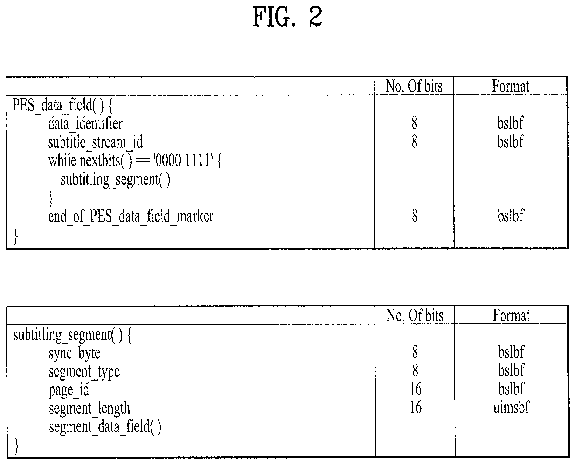

FIG. 2 shows a data field included in a PES packet according to an embodiment of the present invention. A PES packet that transmits a subtitle stream according to the present invention may include a PES data field (PES_data_field()) in PES_packet_data_byte. PES_data_field () may include a data identifier (data_identifier), a subtitle stream identifier (subtitle_stream_id), and a subtitle segment (subtitling_segment()). In addition, the subtitle segment (subtitling_segment()) may include a synchronization byte (sync_byte), segment type information (segment_type), a page identifier (page_id), segment length information (segment_length), and a segment data field (segment_data_field()). data_identifier may identify that a stream included in the PES packet is a subtitle stream. Subtitle_stream_id may identify different subtitle streams. This may indicate whether a subtitle stream is an existing bitmap-based subtitle stream or a timed text-based subtitle stream. segment_type, which is information included in the subtitle segment (subtitling_segment()), may indicate the kind of segment included in the following segment_data_field(). For example, in the case in which segment_type has a value of 0x20, this may indicate that the segment is a timed text (e.g. EBU-TT-D, TTML, or IMSC1)-based subtitle segment. In the case in which segment_type has a value of 0x21, this may indicate that the segment is a segment including font data used in timed text. page_id may indicate an identifier for the group of segments related to a subtitle. That is, this may indicate that segments having the same page_id are segments used to configure the same subtitle. For example, in the case in which a Korean subtitle and an English subtitle are present, subtitle data corresponding to the Korean subtitle and subtitle data corresponding to the English subtitle may be distinguished using different page_ids. That is, data included in a single service may be designated using page_id. segment_length may indicate the length of segment data included in the following segment_data_field(). segment_data_field() may include substantial segment data.

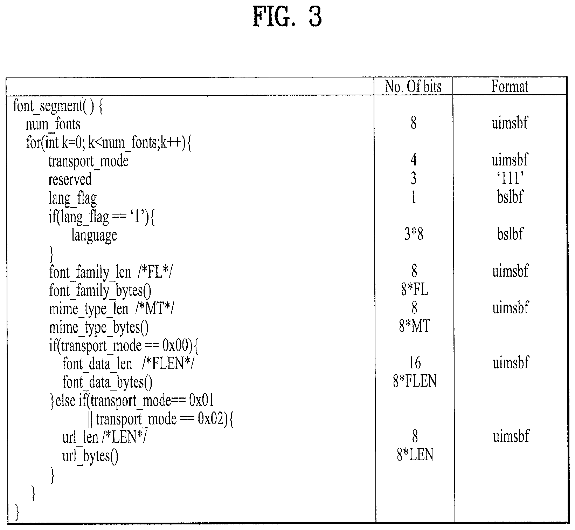

FIG. 3 shows a font segment according to an embodiment of the present invention. In this embodiment, the above segment_type indicates a segment including a font related to a timed text-based subtitle or download data of the font. For example, in the case in which segment_type has a value of 0x21, the above segment_data_field() may include the shown font_segment(). font_segment() may include at least one of font number information (num_fonts), language flag information (lang_flag), language information (language), font family length information (font_family_len), font family information (font_family_bytes()), mime type length information (mime_type_len), mime type information (mime_type_bytes()), transport mode information (transport_mode), font data length information (font_data_len), font data information (font_data_bytes()), URL length information (url_len), or URL information (url_bytes()). num_fonts may indicate the number of fonts related to a subtitle. lang_flag may indicate whether there exists language information of the font as described below. The language may indicate language information of the font, which may be indicated in the form defined by ISO 639-2 or ISO 639-2/T. font_family_len may indicate the length of the following font_family_bytes. font_family_bytes() may include the family of the font. That is, font_family_bytes() may include "default", "monospace", "sansSerif', "serif", "monospaceSansSerif', "monospaceSerif", "proportionalSansSerif', and "proportionalSerif". mime_type_len may indicate the length of the following mime_type_bytes(). mime_type_bytes() may include mime type related to the font. For example, in the case in which mime_type_bytes() is Open Font Format, this may indicate application/font-sfnt, etc. In addition, mime_type_bytes() may include the name of the font, such as "arial". transport_mode may indicate a font data transport mode. For example, in the case in which transport_mode has a value of 0x00, this may indicate that the font is transmitted while including font data. In the case in which transport_mode has a value of 0x01, this may indicate that font data are transmitted through a data carousel within a broadcast network. In the case in which transport_mode has a value of 0x02, this may indicate that font data can be downloaded over the Internet. font_data_len may indicate the length of the font_data_bytes(). font_data_bytes() may include font data. url_len may indicate the length of the following url_bytes(). url_bytes() may indicate a path through which the font data can be downloaded. For example, in the case in which transport_mode has a value of 0x01, url_bytes() may include a path through which font data can be received through a data carousel (DSM-CC, etc.) within a broadcast network, an object that transmits the font, or information for identifying the data carousel. In the case in which transport_mode has a value of 0x02, url_bytes() may indicate an Internet URL from which the font data can be downloaded. Here, the URL may be indicated in the form of a uri or urn. That is, transport_mode may indicate a uniform/universal resource identifier (URI), which is the higher concept of the URL, instead of the URL. In this specification, a description of the URL may be interpreted as the description of the URI.

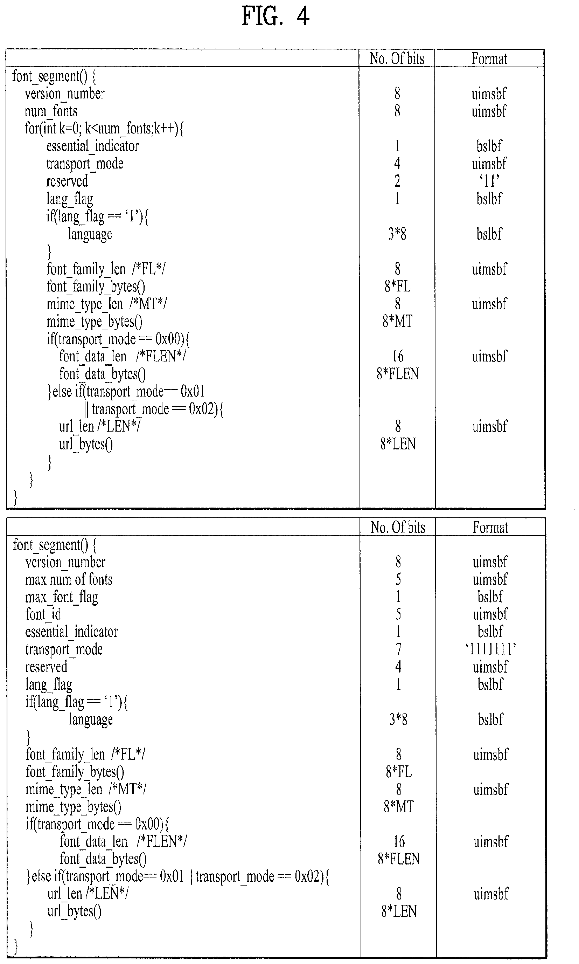

FIG. 4 shows an extended font segment according to an embodiment of the present invention. The upper end of this figure shows an embodiment of font_segment() including information about a plurality of fonts. The font segment (font_segment()) according to this embodiment may further include version information (version_number) and an essential indicator (essential_indicator), in addition to the above-mentioned information. version_number may signal the version of font_segment(). version_number may indicate whether font-related information in the font segment has been changed. A broadcast signal receiver may determine whether font information has been changed through version_number in font_segment(). essential_indicator may indicate whether a font described in the font segment must essentially be used in timed text. For example, in the case in which the value of essential_indicator is 1, this may indicate that the font must essentially be used in timed text. In this case, the receiver may download and use font data according to transport_mode. A description of fields other than version_number and essential_indicator is the same as the above description. The broadcast signal receiver may receive font data using version_number and essential_indicator, a detailed description of which will follow.

In another embodiment, the lower end of this figure shows an embodiment of font_segment() including information about a font. The font segment (font_segment()) according to this embodiment may further include version information (version_number), information about the maximum number of fonts (max_num_of_fonts), a final font indicator (max_font_flag), a font identifier (font_id), and an essential indicator (essential_indicator), in addition to the above-mentioned information. version_number may signal the version of font_segment(), as described above. A broadcast signal receiver may determine whether font information has been changed through version_number in font_segment(). max_num_of_fonts information may signal the total number of font segments. That is, in the case in which one font_segment() can signal only one font, as in this embodiment, information about the total number of font segments that are transmitted may be signaled. max_font_flag may indicate whether the current font segment, among a plurality of font segments that are transmitted together, is the final font segment. That is, in the case in which a plurality of pieces of font information is signaled, whether the font is the final one of the fonts may be indicated. In other words, it may be signaled that the font segment (font_segment()) cumulatively includes new font_segment information, rather than replacing existing font_segment, based on max_font_flag or max_num_of_fonts. font_id is an identifier for a font, which may identify which font the information in the segment pertains to. A description of other fields is the same as the above description.

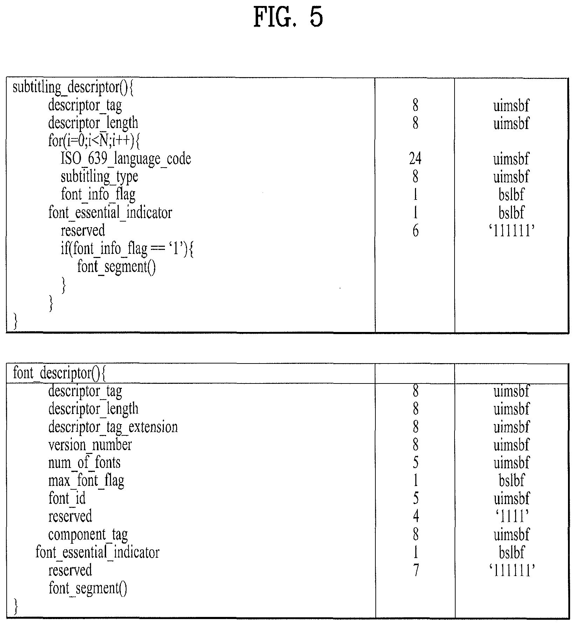

FIG. 5 shows a method of transmitting font information as signaling information according to an embodiment of the present invention. The above font_segment() may be transmitted as a portion of signaling on service information (SI). For example, the SI may be a Service Description Table (SDT), an Event Information Table (EIT), or a Network Information Table (NIT) of a Digital Video Broadcasting (DBV) system, and may be signaled while being included in each table in the form of a descriptor (subtitling_descriptor). The above font_segment() may be transmitted while being included in a Program Map Table (PMT) of Program-Specific Information (PSI). subtitling_descriptor may include at least one of descriptor tag information (descriptor_tag), descriptor length information (descriptor_length), subtitle font information(subtitling_type), a font information flag (font_info_flag), an essential font indicator (font_essential_indicator), or a font segment (font_segment()). The subtitling_type field may distinguish that the component to which subtitling_descriptor is applied is an XML-based subtitle. An embodiment in which XML can be designated using four bits of MSB and in which a desired aspect ratio is designated using four lower bits may be used. In addition, page_id may match the characteristics of the subtitle and the applied part of the XML body. For example, page_id may be used in order to extract subtitle data constituted by a specific language in the XML body. font_info_flag is a flag for indicating whether font-related information that is associated with a subtitle is included. Here, the font-related information may indicate the path through which the font can be downloaded. font_essential_indicator may indicate whether the font must be essentially used in timed text. For example, in the case in which font_essential_indicator has a value of 1, this may indicate that the font must essentially be used in timed text. In this case, a receiver may download and use the font data according to the transport_mode. font_segment() may include information about a font family, a mime type, and a font download path, as previously described.

The above font_segment() may be transmitted as a portion of signaling on service information (SI). Here, the SI may be Program-Specific Information (PSI). For example, the SI may be a Service Description Table (SDT), an Event Information Table (EIT), or a Network Information Table (NIT) of a Digital Video Broadcasting (DBV) system, and may be signaled while being included in each table in the form of a descriptor (subtitling_descriptor). The above font_segment() may be transmitted while being included in a Program Map Table (PMT) of the Program-Specific Information (PSI).

font_descriptor may include at least one of descriptor tag information (descriptor_tag), descriptor length information (descriptor_length), descriptor tag extension information (descriptor_tag_extension), version number information (version_number), information about the number of fonts (num_of_fonts), a final font indicator (max_font_flag), component tag information (component_tag), an essential font indicator (font_essential_indicator), or a font segment (font_segment()).

descriptor_tag is information identifying the descriptor, which may have a value indicating a font descriptor. descriptor_length is information indicating the length of the descriptor. descriptor_tag_extension may further include tag extension information for a font descriptor in descriptor_tag. version_number may signal the version of font_descriptor(). A broadcast signal receiver may determine whether font information has been changed through version_number in order to determine whether font-related information has been changed. num_of_ fonts may indicate the total number of font descriptors that are included in an SDT, EIT, or NIT, which is DVB SI, or that are included in a PMT, which corresponds to PSI. In the case in which only one font is signaled through one font_descriptor, i.e. in the case in which each font descriptor signals a single font, num_of_ fonts may be used. As a result, the broadcast signal receiver may prepare a space for a downloadable font in advance using num_of_fonts. In the case in which a plurality of pieces of font information is signaled, max_font_flag may indicate whether the corresponding one of the fonts is the final font. For example, in the case in which max_font_flag is 0, this may indicate that an additional font descriptor exists. In the case in which max_font_flag is 1, this may indicate that the descriptor is a descriptor for the final font. That is, in the case in which descriptor_tag or descriptor_tag_extension of font_descriptor is the same, it may be indicated that the font_descriptor cumulatively includes the information, rather than replaces existing font_descriptor, based on at least one of max_font_flag or max_num_of_fonts. font_id is an identifier for a font, which may signal which font the information pertains to. For example, in the case in which max_nums_of_fonts is 3, font_id may be indicated as 0, 1, and 2 (or 1, 2, and 3). component_tag is an identifier for identifying a subtitle stream that is associated with the font data. A description of font_essential_indicator is the same as the above description. font_segment() may indicate information about the font family, mime type, and font download path, as previously described. font_segment() may include a field itself, included in font_segment(), in a descriptor without any change, instead of font_segment(). The broadcast receiver according to the present invention may identify version number information of a specific font and whether the specific font has been essentially downloaded from the above subtitling_descriptor or font_descriptor, and may download the font through related information in order to display subtitle data.

The following relates to an embodiment of the operation of the receiver for font download. The operation of the receiver for font download may be divided into two examples.

A first embodiment of the operation of the receiver is an example of caching a necessary font for each event after downloading all fonts in advance. This embodiment has an advantage in that necessary fonts may be downloaded in advance. However, the percentage of font data that occupy the storage space of the receiver may be increased.

First, at step 1, the receiver may receive a plurality of font descriptors through at least one of an SDT/NIT/EIT, which is DVB SI, or a PMT of PSI.

At step 2, the receiver may identify version_number and font_id of the font descriptor, and in the case in which the combination of version_number and font_id is different from the combination received previously, may receive and decode the descriptor.

At step 3, in the case in which the combination of version_number and font_id is different, the receiver may acquire font information corresponding to the font id.

In the case in which the font descriptor includes a max_font_flag field, the receiver may determine whether the font included in the event/service is the final font through the value of max_font_flag included in the font descriptor. In the case in which the value of max_font_flag is 0, the receiver may continuously receive font_descriptor, and may cumulatively store font information. In the case in which the value of max_font_flag is 1, this indicates that next font_descriptor does not exist. Even font information included in the current font descriptor may be stored. In other words, font_id having a larger value than font_id in which max_font_flag='1' does not exist.

In the case in which the font descriptor includes a num_of_fonts field, the receiver may check the total number of fonts through the value of num_of_fonts. That is, the receiver may check in advance the number of fonts to be stored through num_of_fonts, and a storage space may be secured in the receiver.

At step 4, the receiver may download the font using the received font information.

At step 5, in the case in which the receiver downloads the font in advance and outputs a relevant event/service, the receiver may identify a TTML document, which is a received subtitle document, in order to determine which font is necessary. At this time, the receiver may manage, call, and use stored fonts using font information (font name, font family, style, etc.) included in the font descriptor.

At step 6, the receiver may display a subtitle by applying the font.

Subsequently, in the case in which the receiver receives a font descriptor from an SDT/NIT/EIT, which is DVB SI of another channel, or a PMT of PSI, the receiver may repetitively perform four steps from step 1 to step 4 when a new font is downloaded. In order to check duplication with the existing font stored in the receiver, however, the receiver may compare newly received font information with the font information that has already been stored in order to determine whether to download the font.

A second embodiment of the operation of the receiver is an example of receiving only information about a font for a specific event and downloading the font. That is, this embodiment has an advantage in that the percentage of font data that occupy the storage space of the receiver is lower than in the first embodiment of the operation of the receiver. Since the receiver does not download font data in advance, however, font data may be downloaded only after an event starts. Consequently, the receiver may display a subtitle only after downloading the font data.

First, at step 1, the receiver may identify information about a downloadable font for supporting a specific event through an EIT including information about the event (depending on the circumstances, SDT/NIT, PMT, etc.).

At step 2, the receiver may download a font for the event.

In some embodiments, an EIT may include only an id corresponding to an identifier of a font for an event or information about a location at which the font is signaling. In this case, the receiver may acquire additional information about font download through signaling of an SDT/NIT, and may download the font with reference to the additional information. A method of receiving an actual font descriptor and downloading a font and a method of storing font information are similar to the operation of the receiver described above.

The following relates to an embodiment of operation of the receiver for font fallback. Font fallback may mean referring to another font when characters that cannot be expressed by the current font exist or when the font to be used has not been downloaded. Additional information about the font, such as the font name, font family, and language, may be used by the receiver as information for font fallback in the future. Here, the font name may include information, such as the font style and font weight. The process in which the information is used for font fallback may be as follows.

At step 1, in the case in which font_essential_indicator included in font_descriptor is 0, this may indicate that the font is a supplementary font. In the case in which font_essential_indicator is 0, the receiver may selectively download the font.

At step 2, when the receiver decides not to download the font and uses the existing font stored in the receiver, the receiver may decide to perform font fallback. In addition, in the case in which the font cannot be downloaded through an IP network or carousel, the receiver may decide to perform font fallback.

At step 3, the receiver may determine whether the same font name having different style or weight information exists among font names including styles, which are the full font names, and weights. In the case in which a partially identical font name having different style or weight information exists, the font is selected.

At step 4, the receiver may determine whether the same font family exists among the existing fonts stored in the receiver through the font family information.

At step 5, the receiver may determine whether a font that can be displayed exists among fonts stored in the receiver while being sorted as the same language through language information.

At step 6, the receiver may additionally determine whether another font having the same style or weight information exists.

In the font fallback operation of the receiver, the sequence of the processes from step 3 to step 6 may be changed. Also, in the case in which multiple pieces of font information stored in the receiver coincide with each other, the receiver may select the font having the largest number of matched items, or may finally fall back to the font according to priority. That is, the receiver may decide on the most suitable font among the existing fonts stored therein through the processes from step 3 to step 6. The receiver may display a subtitle using the most suitable font.

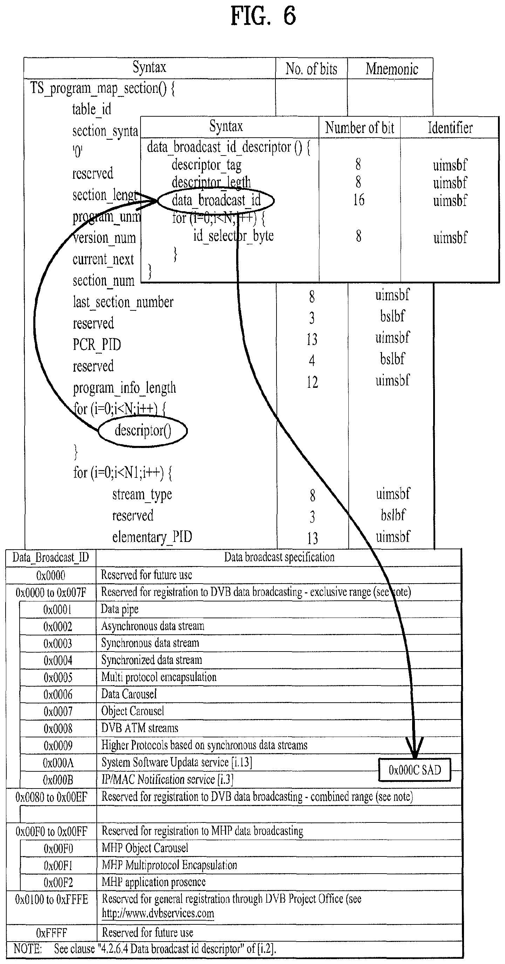

FIG. 6 shows a method of identifying DVB SAD according to an embodiment of the present invention. As a method of delivering information about an XML-based subtitle, data_broadcast_id of data_broadcast_id_descriptor() included in a PMT (Program Map Table) may identify SAD. In the case in which existing DVB SAD (Synchronized Auxiliary Data) are extended for PES packetization of a TTML-based subtitle, as in the present invention, it is necessary to provide a method of distinguishing between the existing SAD and the subtitle. The reason for this is that stream_type of a PMT for the existing SAD is 0x06 (PES carrying private data), that is, is the same, and that stream_id of PES is 0xBD, that is, is the same. In order to distinguish therebetween, therefore, a PMT may include a data broadcast id descriptor for DVB SAD. In the case in which a PMT includes data_broadcast_id_descriptor(), this may be SAD. At this time, data_broadcast_id may be 0x000C. Also, in the case in which a PMT includes a font descriptor, this may be sorted as a subtitle made based on DVB SAD.

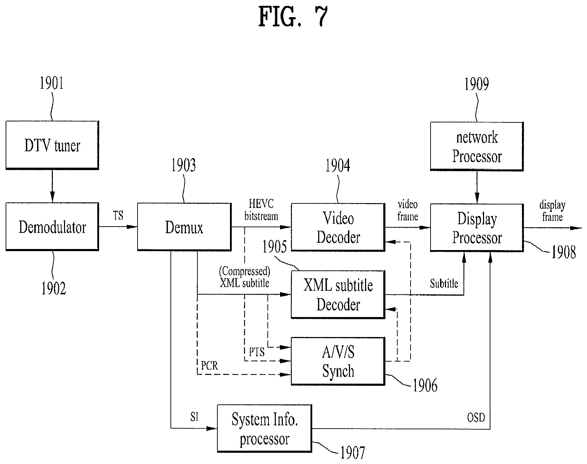

FIG. 7 is a view showing the detailed configuration of a broadcast receiver according to an embodiment of the present invention. The broadcast receiver may include at least one of a DTV tuner 1901, a demodulator 1902, a demultiplexer (demux) 1903, a video decoder 1904, an XML subtitle decoder 1905, an audio/video/subtitle synchronizer (A/V/S sync) 1906, a system information processor (SI processor) 1907, and/or a display processor 1908. In some embodiments, the broadcast receiver may further include a network processor 1909.

The DTV tuner 1901 may receive a broadcast signal transmitted by the transmitter. The received broadcast signal may be input to the demodulator 1902. The received broadcast signal may include media data and subtitle data related thereto.

The demodulator 1902 may demodulate the broadcast signal and output a transport stream (TS). The TS may be input to the demultiplexer 1903, by which the TS may be demultiplexed. The demultiplexed TS may include media data (e.g. HEVC bitstream), an XML subtitle stream, and SI (service information). Here, the XML subtitle may be packetized or compressed. As previously described, the XML subtitle or the SI may include information about a font related to the subtitle data.

The video decoder 1904 may decode the media data (e.g. HEVC bitstream) input thereto in order to output a video frame.

The XML subtitle decoder 1905 may extract a subtitle from the XML subtitle stream input thereto in order to decode the subtitle. As previously described with reference to FIGs. 2 to 4, a PES packet of the XML subtitle stream may include at least one of information about the font related to the subtitle data, version information of a font segment, or information indicating that the font is an essential download font.

The audio/video/subtitle synchronizer (A/V/S sync) 1906 may receive a PTS and Program Clock Reference (PCR) of each of the media data (HEVC bitstream) and the XML subtitle in order to synchronize the video frame and the subtitle.

The system information processor 1907 may receive the service information (SI) output from the demultiplexer, and may extract OSD information therefrom. As previously described with reference to FIGs. 5 and 6, the PSI or SI information may include at least one of information about the font related to the subtitle data, version information of the font segment, or information indicating that the font is an essential download font.

The network processor 1909 may receive font data related to the subtitle data using transaction_Id or URL information in the above subtitle-related font information. Particularly, the network processor may download the font data based on "essential" information, which is information indicating that the font is an essential download font, and version information (version_number).

The display processor 1908 may receive the video frame and the subtitle, and may output a display frame. The display processor 1908 may further receive On Screen Display (OSD) information, in addition to the video frame and the subtitle, and may output a display frame. Here, the OSD information may indicate information about the font related to the subtitle data, information about the safe area, or information indicating that the font is an essential download font. The output display frame may be displayed through an image output device, and the XML subtitle and the video frame, described in the present invention, may also be displayed.

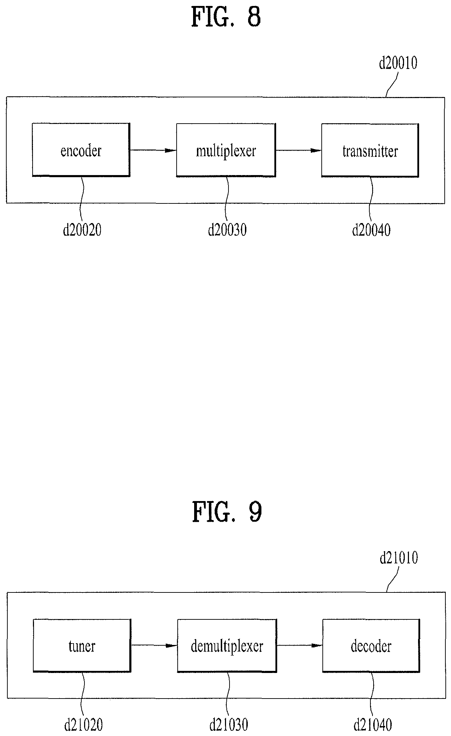

FIG. 8 is a block diagram showing a broadcast transmitter according to an embodiment of the present invention. The broadcast transmitter d20010 according to the present invention may include an encoder d20020, a multiplexer d20030, and/or a transmitter d20040.

The encoder d20020 may encode video data having a resolution of UHD, HD, or SD input thereto in order to generate a video stream. Here, the video stream may be encoded by High Efficiency Video Coding (HEVC). The video stream may mean a video elementary stream (ES) or a video packetized elementary stream (PES). According to the embodiment of the prevent invention, the encoder may encode subtitle data into a subtitle stream, and PES packets constituting the subtitle stream may further include at least one of font information associated with the subtitle data, essential download subtitle information, or font segment version information.

The encoded video stream may be input to the multiplexer d20030 together with the XML subtitle stream. The multiplexer d20030 may multiplex the encoded PSI or SI information, video stream, and subtitle stream in order to generate a transport stream (TS). Here, the subtitle stream may be an XML subtitle stream. In some embodiments, at least one of the font information associated with the subtitle data, the essential download font information, or the font segment version information may be transmitted while being multiplexed together with the video stream and the subtitle stream in the PSI or SI information.

The transmitter d20040 may transmit the transport stream output from the multiplexer d20030 as a broadcast signal. Here, the transport stream may be channel-coded and modulated before being transmitted as the broadcast signal.

FIG. 9 is a block diagram showing a broadcast receiver according to an embodiment of the present invention. The broadcast receiver d21010 according to the present invention may include a tuner d21020, a demultiplexer d21030, and/or a decoder d21040.

A broadcast signal received by the tuner d21020 may be demodulated and then channel-decoded. The channel-decoded broadcast signal may be input to the demultiplexer d21030, by which the broadcast signal may be demultiplexed into a video stream, a subtitle stream, and PSI or SI. The subtitle stream or the PSI or SI may include at least one of font information associated with subtitle data, essential download font information, or font segment version information.

The output of the demultiplexer may be input to the decoder d21040, by which the output may be decoded into video data and subtitle data. That is, the video stream may be decoded by a video decoder so as to be output as video data, and the subtitle stream may be decoded by a subtitle decoder so as to be output as subtitle data. The video data and the subtitle data may be synchronized so as to be displayed by the receiver. The broadcast receiver may acquire font information associated with the subtitle data, essential download font information, and font segment version information from the subtitle stream or the SI. The broadcast receiver may receive font data related to the subtitle data using the above information, may use the font data, and may display the subtitle data.

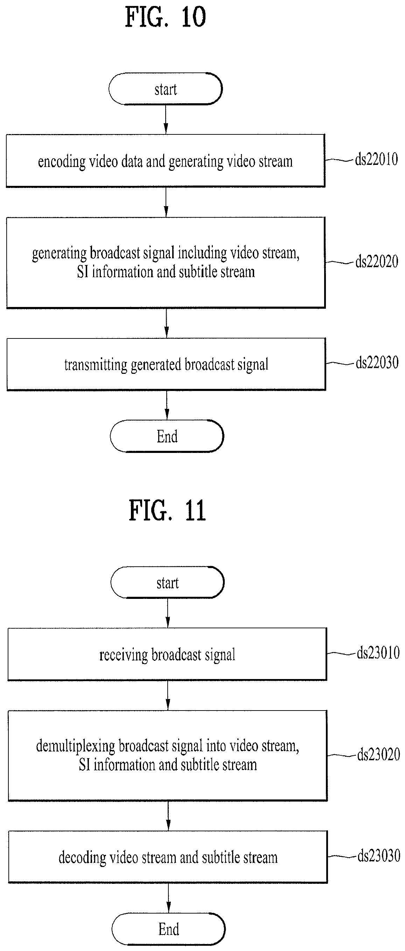

FIG. 10 is a view showing a method of transmitting a broadcast signal including an XML subtitle according to an embodiment of the present invention. The method of transmitting the broadcast signal including the XML subtitle may include encoding video to generate a video stream (ds22010), generating a broadcast signal including the generated video stream and subtitle information (ds22020), and transmitting the generated broadcast signal (ds22030).

At the step of encoding video to generate a video stream (ds22010), video data having a resolution of UHD, HD, or SD may be input, and the video data may be encoded to generate a video stream. Here, the video stream may be encoded by High Efficiency Video Coding (HEVC). The video stream may be a video elementary stream (ES) or a video packetized elementary stream (PES). In addition, an XML subtitle stream may be generated. The subtitle stream may include at least one of font information associated with the subtitle data, essential download font information, or font segment version information.

At the step of generating a broadcast signal including the generated video stream, PSI or SI information, and subtitle stream (ds22020), the encoded video stream and the subtitle stream may be multiplexed to generate a transport stream (TS). Here, the subtitle stream may be an XML subtitle stream. A PED packet included in the TS may include subtitle data and subtitle-related information, and, for example, may include at least one of font information associated with the subtitle data, essential download font information, or font segment version information.

At the step of transmitting the generated broadcast signal (ds22030), the transport stream may be transmitted as a broadcast signal. Here, the transport stream may be channel-coded and modulated before being transmitted as the broadcast signal.

FIG. 11 is a view showing a method of receiving a broadcast signal including an XML subtitle according to an embodiment of the present invention. The method of receiving the broadcast signal including the XML subtitle may include receiving a broadcast signal (ds23010), demultiplexing the received broadcast signal into PSI or SI information, a video stream, and a subtitle stream (ds23020), and decoding the video stream (ds23030).

At the step of receiving a broadcast signal (ds23010), a broadcast signal received using the tuner may be demodulated and then channel-decoded. At the step of demultiplexing the received broadcast signal into PSI or SI information, a video stream, and a subtitle stream (ds23020), the channel-decoded broadcast signal may be demultiplexed into a video stream and a subtitle stream using the demultiplexer. The SI information or the subtitle stream may include at least one of font information associated with subtitle data, font segment version information, or information indicating that the font is an essential download font.

At the step of decoding the video stream and the subtitle stream (ds23030), the video stream may be decoded using the video decoder in order to acquire video data. At this step, the subtitle stream may be decoded using the subtitle decoder in order to acquire subtitle data. The video data and the subtitle data may be synchronized so as to be displayed by the receiver. The receiver may further receive font data using font information associated with the subtitle data, font segment version information, and information indicating that the font is an essential download font. The receiver may display the subtitle data using the font data.

According to an embodiment of the present invention, it is possible to acquire font-related information that is associated with a subtitle stream.

According to an embodiment of the present invention, it is possible to receive the font-related information from a data carousel using the font-related information.

According to an embodiment of the present invention, it is possible to signal whether font data associated with the subtitle stream is to be essentially downloaded.

According to an embodiment of the present invention, it is possible to signal version information of a font segment that is associated with the subtitle stream.

According to an embodiment of the present invention, the subtitle stream may include a broadcast id descriptor, and a data broadcast identifier (data_broadcast_id) included in the broadcast id descriptor may indicate SAD (Synchronized Auxiliary Data).

While the present invention has been described with reference to separate drawings for the convenience of description, new embodiments may be implemented by combining embodiments illustrated in the respective drawings. As needed by those skilled in the art, designing a computer-readable recording medium, in which a program for implementing the above-described embodiments is recorded, falls within the scope of the present invention.

The apparatus and method according to the present invention is not limitedly applied to the constructions and methods of the embodiments as previously described; rather, all or some of the embodiments may be selectively combined to achieve various modifications.

Meanwhile, the image-processing method according to the present specification may be implemented as code that can be written on a processor-readable recording medium and thus read by a processor provided in a network device. The processor-readable recording medium may be any type of recording device in which data is stored in a processor-readable manner. The processor-readable recording medium may include, for example, read only memory (ROM), random access memory (RAM), compact disc read only memory (CD-ROM), magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

It will be apparent that, although the preferred embodiments have been shown and described above, the present specification is not limited to the above-described specific embodiments, and various modifications and variations can be made by those skilled in the art to which the present invention pertains without departing from the gist of the appended claims. Thus, it is intended that the modifications and variations should not be understood independently of the technical spirit or prospect of the present specification.

In addition, the present specification describes both a product invention and a method invention, and descriptions of the two inventions may be complementarily applied as needed.

### [Mode for Invention]

Various embodiments have been described in the best mode for carrying out the invention.

### [Industrial Applicability]

The present invention has industrial applicability in that the present invention can be repeatedly used in broadcast and video signal processing fields.

## Claims

1. A broadcast signal transmission method comprising:
encoding video data to generate a video stream;
generating a broadcast signal comprising the generated video stream and a subtitle stream, the broadcast signal further comprising version information of font data associated with subtitle data contained in the subtitle stream and an indicator indicating whether the font data are essential; and
transmitting the generated broadcast signal.

2. The broadcast signal transmission method according to claim 1, wherein the version information of font data and the indicator indicating whether the font data are essential are transmitted in a state of being contained in Program-Specific Information (PSI) or service information.

3. The broadcast signal transmission method according to claim 1, wherein the broadcast signal further comprises information enabling downloading of the font data, and the information enabling downloading of the font data is uniform/universal resource identifier (URI) information comprising a transaction identifier (transaction ID).

4. The broadcast signal transmission method according to claim 1, wherein the subtitle stream comprises a broadcast id descriptor, and a data broadcast identifier (data_broadcast_id) contained in the broadcast id descriptor is set to a value indicating Synchronized Auxiliary Data (SAD).

5. A broadcast signal transmission apparatus comprising:
an encoder for encoding video data to generate a video stream;
a multiplexer for generating a broadcast signal comprising the generated video stream and a subtitle stream, the broadcast signal further comprising version information of font data associated with subtitle data contained in the subtitle stream and an indicator indicating whether the font data are essential; and
a transmitter for transmitting the generated broadcast signal.

6. The broadcast signal transmission apparatus according to claim 5, wherein the version information of the font data and the indicator indicating whether the font data are essential are transmitted in a state of being contained in Program-Specific Information (PSI) or service information.

7. The broadcast signal transmission apparatus according to claim 6, wherein the broadcast signal further comprises information enabling downloading of the font data, and the information enabling downloading of the font data is uniform/universal resource identifier (URI) information comprising a transaction identifier (transaction ID).

8. The broadcast signal transmission apparatus according to claim 5, wherein the subtitle stream comprises a broadcast id descriptor, and a data broadcast identifier (data_broadcast_id) contained in the broadcast id descriptor is set to a value indicating Synchronized Auxiliary Data (SAD).

9. A broadcast signal reception method comprising:
receiving a broadcast signal, the broadcast signal comprising a video stream and a subtitle stream, the broadcast signal further comprising version information of font data associated with subtitle data contained in the subtitle stream and an indicator indicating whether the font data are essential;
demultiplexing the received broadcast signal into the video stream and the subtitle stream;
decoding the video stream and the subtitle stream;
downloading the font data based on the version information of the font data; and
displaying the subtitle stream using the font data.

10. The broadcast signal reception method according to claim 9, wherein the version information of the font data and the indicator indicating whether the font data are essential are received in a state of being contained in Program-Specific Information (PSI) or service information.

11. The broadcast signal reception method according to claim 10, wherein the broadcast signal further comprises information enabling downloading of the font data, and the information enabling downloading of the font data is uniform/universal resource identifier (URI) information comprising a transaction identifier (transaction ID).

12. The broadcast signal reception method according to claim 9, wherein the subtitle stream comprises a broadcast id descriptor, and a data broadcast identifier (data_broadcast_id) contained in the broadcast id descriptor is set to a value indicating Synchronized Auxiliary Data (SAD).

13. A broadcast signal reception apparatus comprising:
a tuner for receiving a broadcast signal, the broadcast signal comprising a video stream and a subtitle stream, the broadcast signal further comprising version information of font data associated with subtitle data contained in the subtitle stream and an indicator indicating whether the font data are essential;
a demultiplexer for demultiplexing the received broadcast signal into the video stream and the subtitle stream;
a decoder for decoding the video stream and the subtitle stream;
a network processor for downloading the font data based on the version information of the font data; and
a display processor for displaying the subtitle stream using the font data.

14. The broadcast signal reception apparatus according to claim 13, wherein the version information of the font data and the indicator indicating whether the font data are essential are received in a state of being contained in Program-Specific Information (PSI) or service information.

15. The broadcast signal reception apparatus according to claim 14, wherein the broadcast signal further comprises information enabling downloading of the font data, and the information enabling downloading of the font data is uniform/universal resource identifier (URI) information comprising a transaction identifier (transaction ID).
